# EUROPÄISCHE PATENTSCHRIFT

(11) **EP 3 844 866 B1**
(45) Veröffentlichungstag und Bekanntmachung des Hinweises auf die Patenterteilung: **15.02.2023**
(21) Anmeldenummer: 19769003.5
(22) Anmeldetag: 29.08.2019
(51) Int. Cl.: H02N 2/12, H02N 2/10, H02N 2/00

(54) **ULTRASCHALLAKTOR**
ULTRASONIC ACTUATOR
ACTIONNEUR ULTRASONORE

(30) Priorität: 30.08.2018 DE 102018121179
(43) Veröffentlichungstag der Anmeldung: 07.07.2021
(73) Patentinhaber: Physik Instrumente (PI) GmbH & Co. KG, 76228 Karlsruhe (DE)
(72) Erfinder: KOC, Burhanettin, 76275 Ettlingen (DE)
(74) Vertreter: Keller Schneider Patentanwaltsgesellschaft mbH
(86) Internationale Anmeldenummer: PCT/DE2019/100781
(87) Internationale Veröffentlichungsnummer: WO 2020/043242

(56) Entgegenhaltungen:
- WO-A2-2004/064170
- DE-B3-102012 201 863

## Beschreibung

Die Erfindung betrifft einen Ultraschallaktor und einen Ultraschallmotor mit einem solchen Ultraschallaktor und einer den Ultraschallaktor haltenden Haltevorrichtung sowie ein Verfahren zur elektrischen Anregung eines U ltraschal laktors.

Die DE 10 2012 201 863 B3 und die WO 2004/064170 beschreiben jeweils einen Ultraschallaktor mit einer radial nach außen weisenden äußeren Umfangsfläche und Friktionselementen an beiden Stirnflächen des Ultraschallaktors. Die DE 10 2013 224 569 B3 offenbart einen hohlzylindrischen Ultraschallaktor, bei welchem Friktionselemente an dessen oberer und unterer Stirnfläche derart angeordnet sind, dass sich diese jeweils nicht gegenüberliegen, sondern um einen bestimmten Umfangswinkel versetzt zueinander angeordnet sind. Mittels elektrischer Spannungsbeaufschlagung der an den Umfangsflächen des Hohlzylinders angeordneten Elektroden ist hierbei eine voneinander unabhängige Bewegung der Friktionselemente von oberer und unterer Stirnfläche möglich, so dass zwei durch den Ultraschallaktor anzutreibende Elemente, die mit den jeweiligen Friktionselementen in Kontakt stehen, unabhängig voneinander bewegbar sind.

Die DE 10 2017 114 667 B3 lehrt einen hohlzylindrischen Ultraschallaktor, bei welchem sich die an dessen oberen und unteren Stirnfläche angeordneten Friktionselemente jeweils gegenüberliegen.

Aus der EP 2 845 305 B1 ist ein Ultraschallaktor in Form eines Hohlzylinders bekannt, bei dem entweder an einer seiner Stirnflächen oder aber an beiden Stirnflächen Friktionselemente angeordnet sind. Im Falle des Vorhandenseins von an beiden Stirnflächen befindlichen Friktionselementen ist an jeder Stirnfläche die gleiche Anzahl von Friktionselementen vorgesehen, wobei die Positionen der Friktionselemente der einen Stirnfläche bezogen auf den Umfang mit den Positionen der Friktionselemente der anderen Stirnfläche bezogen auf den Umfang übereinstimmen, so dass jeweils zwei Friktionselemente gegenüberliegend an den unterschiedlichen Stirnflächen angeordnet sind.

Mit an beiden Stirnflächen angeordneten Friktionselementen ist es möglich, diese gleichzeitig für den Antrieb eines anzutreibenden Elements zu nutzen. Hierzu sind die Friktionselemente der jeweiligen Stirnfläche in Kontakt mit einem zugeordneten Reibelement, welches seinerseits mit einer anzutreibenden Welle verbunden ist. Um eine ausreichende Antriebskraft von den Friktionselementen auf das jeweilige Reibelement zu übertragen, sind die Reibelemente gegen die Friktionselemente der jeweiligen Stirnfläche angepresst.

Hierbei ist es jedoch von Nachteil, dass die von beiden Seiten über die Friktionselemente auf den Ultraschallaktor einwirkenden Druckkräfte eine Dämpfung der in dem Ultraschallaktor durch elektrische Anregung hervorgerufenen Deformationen bewirken, woraus eine verminderte Antriebsleistung eines entsprechenden Ultraschallmotors resultiert.

Ein weiterer Nachteil des aus der EP 2 845 305 B1 bekannten Ultraschallaktors ist die Ausbildung eines unvorteilhaften Impedanzspektrums, insbesondere bei Verwendung einer höheren Anzahl von Friktionselementen. Mit anderen Worten bewirkt eine höhere Anzahl von an den Stirnflächen angeordneten Friktionselementen die Ausbildung einer Mehrzahl von Peaks im Impedanzspektrum nahe der Resonanzfrequenz des Ultraschallaktors, welche dazu führen, dass die Vibrationen bzw. Bewegungen der Friktionselemente bei der Betriebsfrequenz nicht synchron sind, und eine unerwünschte Geräuschbildung beim Betrieb eines entsprechenden Ultraschallmotors resultiert.

Daher ist es Aufgabe der Erfindung, einen Ultraschallaktor in Form eines Rings oder eines Hohlzylinders bereitzustellen, der eine gleichzeitige bzw. synchrone und zum Antrieb eines anzutreibenden Elements geeignete Bewegung der an beiden Stirnflächen angeordneten Friktionselementen erzeugen kann, welche durch äußere auf die Friktionselemente bzw. auf den Ultraschallaktor einwirkenden Druckkräfte nur geringfügig gedämpft wird, und der insbesondere bei einer höheren Anzahl von an dem Ultraschallaktor angeordneten Friktionselementen ein vorteilhaftes Impedanzspektrum aufweist, so dass beim Betrieb des Ultraschallaktors in einem entsprechenden Ultraschallmotor keine unerwünschte Geräuschbildung auftritt.

Diese Aufgabe wird gelöst durch einen Ultraschallaktor gemäß Anspruch 1, einem Ultraschallmotor nach dem Anspruch 9 sowie einem Verfahren zur elektrischen Anregung des Ultraschallaktors nach dem Anspuch 11, wobei die sich an die Ansprüche 1, 9 und 11 jeweils anschließenden Unteransprüche mindestens zweckmäßige Weiterbildungen beschreiben.

Der im nachfolgenden Teil der Beschreibung gelegentlich verwendete Begriff ,im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Der erfindungsgemäße Ultraschallaktor besteht aus einem elektromechanischen Material und bevorzugt aus einem piezoelektrischen Material wie etwa Piezokeramik (beispielsweise PZT). Der Ultraschallaktor kann daneben auch aus einem elektrostriktiven oder einem magnetostriktiven Material bestehen. Er weist die Form eines Rings oder Hohlzylinders mit einer radial nach innen weisenden inneren Umfangsfläche auf, an welche eine einzige gemeinsame Elektrode angeordnet ist, und einer radial nach außen weisenden äußeren Umfangsfläche auf, wobei die innere Umfangsfläche und die äußere Umfangsfläche über zwei Stirnflächen miteinander verbunden sind. An jeder der beiden Stirnflächen ist wenigstens ein Friktionselement, beispielsweise in Form einer Halbkugel aus einer Oxidkeramik wie etwa Al203, angeordnet, so dass an beiden Stirnflächen zusammen wenigstens n ≥ 2 Friktionselemente angeordnet sind. Andere geometrische Formen der Friktionselemente sind ebenso denkbar.

An der äußeren Umfangsfläche des Ultraschallaktors sind 2n Erregerelektroden angeordnet, wobei benachbarte Erregerelektroden jeweils durch einen Trennspalt voneinander beabstandet und dadurch elektrisch voneinander isoliert sind.

Durch Anlegen einer geeigneten elektrischen Spannung bzw. durch Anlegen geeigneter elektrischer Spannungen an die Elektroden des Ultraschallaktors kann das elektromechanische Material zur Ausbildung periodischer Deformationen angeregt werden, welche sich auf die an dem Ultraschallaktor angeordneten Friktionselemente übertragen, wobei die entsprechenden Bewegungsbahnen der Friktionselemente für einen Antrieb eines oder mehrerer mit den Friktionselementen in Kontakt stehenden/stehender anzutreibenden Elements/anzutreibender Elemente nutzbar sind.

Jedes der Friktionselemente ist hierbei an der jeweiligen Stirnfläche im Bereich eines Trennspalts angeordnet, wobei jeweils zwischen hinsichtlich des Umfangs des Ultraschallaktors benachbarten, jedoch auf unterschiedlichen Stirnflächen befindlichen Friktionselementen, zwei Erregerelektroden mit dazwischen liegendem Trennspalt angeordnet sind. Diese jeweils benachbarten, jedoch auf unterschiedlichen Stirnflächen angeordneten Friktionselemente, bilden ein Gegenpaar von Friktionselementen.

Bei einer elektrischen Anregung des Ultraschallaktors, d.h. bei Anlegen einer oder mehrerer elektrischen Spannung/Spannungen an die Elektroden des Ultraschallaktors, vollführen alle an dem Ultraschallaktor angeordneten Friktionselemente, d.h. sämtliche an der einen Stirnfläche angeordneten Friktionselemente sowie sämtliche an der anderen, gegenüberliegenden Stirnfläche angeordneten Friktionselemente eine gleichzeitige bzw. synchrone Bewegung, die zu einem gleichsinnigen rotatorischen Antrieb eines mit den Friktionselementen in Kontakt stehenden anzutreibenden Elements geeignet ist. Mit anderen Worten schwingen alle Friktionselemente so, dass aufgrund ihrer Schwingungsbahnen ein anzutreibendes Element entlang der gleichen Rotationsrichtung angetrieben ist.

Es kann von Vorteil sein, dass der hinsichtlich des Umfangs des Ultraschallaktors bestehende Abstand zwischen den beiden Friktionselementen eines Gegenpaares für alle Gegenpaare identisch ist, so dass zwei aneinander angrenzende Gegenpaare von Friktionselementen symmetrisch zueinander angeordnet sind.

Es kann ebenso von Vorteil sein, dass beide Stirnflächen jeweils im Bereich des Trennspalts zwischen den beiden Erregerelektroden eines Gegenpaares eine Ausnehmung aufweisen. Hierbei kann es insbesondere von Vorteil sein, dass die Ausnehmungen gleichmäßig über den Umfang des Ultraschallaktors verteilt angeordnet sind.

Zudem kann es von Vorteil sein, dass die Ausnehmungen nutenförmig sind und insbesondere im Querschnitt im Wesentlichen eine V-Form oder eine U-Form aufweisen.

Weiterhin kann es von Vorteil sein, dass die nutenförmigen Ausnehmungen eine radiale Ausrichtung aufweisen.

Es kann vorteilhaft sein, dass die Erregerelektroden eine mehr als vier Ecken aufweisende und insbesondere eine achteckige Form aufweisen.

Die Erfindung betrifft zudem einen Ultraschallmotor mit einem vorstehend beschriebenen Ultraschallaktor und einer Haltevorrichtung, in welcher der Ultraschallaktor eingesetzt ist. Diese Haltevorrichtung weist ein inneres Kontaktelement, ein äußeres Kontaktelement sowie zwei Halteelemente auf.

Das innere Kontaktelement und das äußere Kontaktelement sind über die beiden Halteelemente miteinander verbunden, wobei das innere Kontaktelement über Vorspungsabschnitte abschnittsweise in Kontakt mit der inneren Umfangsfläche des Ultraschallaktors und das äußere Kontaktelement über Vorsprungsabschnitte abschnittsweise in Kontakt mit der äußeren Umfangsfläche des Ultraschallaktors steht. Weiterhin stehen die Haltelemente mit den Stirnflächen des Ultraschallaktors direkt oder indirekt in Kontakt, wobei sie den Ultraschallaktor zwischen sich einspannen.

Vorteile und Zweckmäßigkeiten der Erfindung werden deutlicher aus der nachfolgenden Beschreibung bevorzugter Ausführungsbeispiele anhand der Figuren. Hierbei zeigen:
Figuren 1 und 2: eine Ausführungsform des erfindungsgemäßen Ultraschallaktors
Figuren 3a und 3b: Ultraschallaktor gemäß den Figuren 1 und 2 in abgewickelter Darstellung
Figuren 4a und 4b: zwei weitere Ausführungsformen des erfindungsgemäßen Ultraschallaktors
Figuren 5a bis 5d: eine weitere Ausführungsform des erfindungsgemäßen Ultraschallaktors in unterschiedlichen Ansichten
Fig. 6: Ausführungsform des erfindungsgemäßen Ultraschallaktors mit achteckigen Erregerelektroden
Fig. 7: Haltevorrichtung mit darin montiertem Ultraschallaktor
Fig. 8: Haltevorrichtung und Ultraschallaktor gemäß Figur 7 in einer Explosionsdarstellung
Fig. 9: Ultraschallmotor mit einem erfindungsgemäßen Ultraschallaktor gemäß den Figuren 1 und 2 und einer Haltevorrichtung gemäß Figur 7 bzw. Figur 8

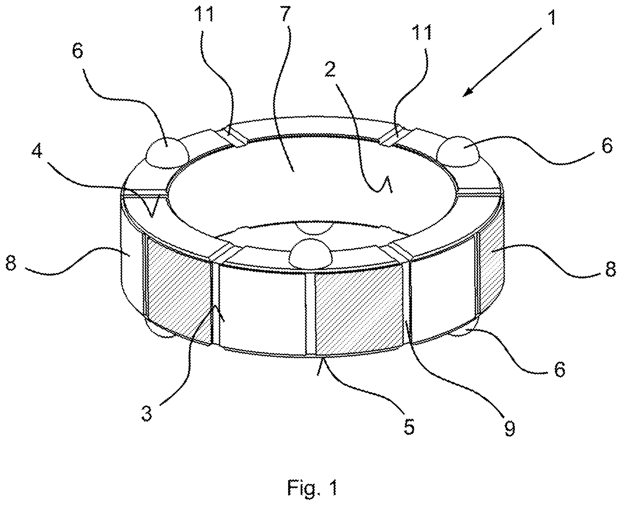

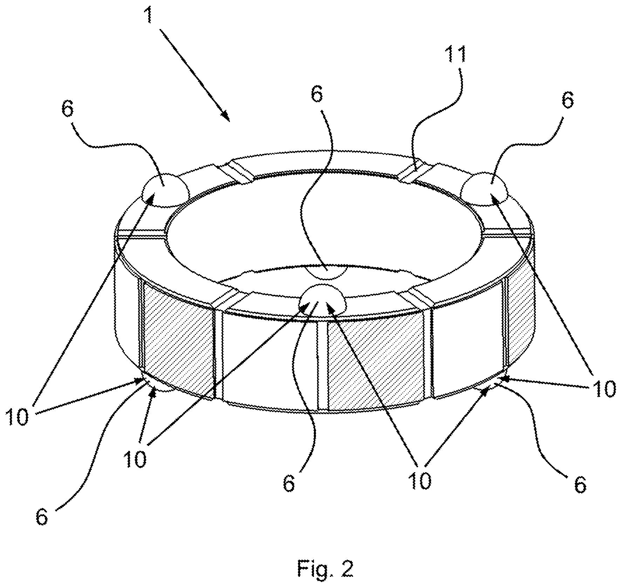

Der erfindungsgemäße Ultraschallaktor 1 nach den Figuren 1 und 2 hat eine hohlzylindrische Form, wobei an der radial nach innen weisenden inneren Umfangsfläche 2 eine einzige gemeinsame Elektrode 7 angeordnet ist, welche die innere Umfangsfläche 2 nahezu vollflächig abdeckt. An der radial nach außen weisenden äußeren Umfangsfläche 3 sind über den Umfang des Hohlzylinders gleichverteilt zwölf im Wesentlichen quadratförmig ausgebildete Erregerelektroden 8 angeordnet, wobei jeweils benachbarte Erregerelektroden voneinander durch einen Trennspalt 9 getrennt und dadurch elektrisch voneinander isoliert sind. Die in den Figuren 1 und 2 schraffierten Erregerelektroden 8 sind nur aus Darstellungs- bzw. Übersichtlichkeitsgründen schraffiert, ansonsten sind sie vollkommen identisch zu den nicht schraffierten Erregerelektroden 8.

Die innere Umfangsfläche 2 und die äußere Umfangsfläche 3 sind über zwei ebene und gegenüberliegend angeordnete Stirnflächen 4 und 5 miteinander verbunden. Es ist denkbar, dass eine der beiden Stirnflächen oder aber auch beide Stirnflächen nicht eben ist bzw. sind, sondern eine Neigung aufweist bzw. aufweisen. Mit anderen Worten ist es denkbar, dass - abweichend zu der in den Figuren 1 und 2 gezeigten Ausführungsform eines erfindungsgemäßen Ultraschallaktors - eine oder beide Stirnflächen 4 und 5 nicht in einem rechten Winkel zu der inneren und zu der äußeren Umfangsfläche 2 und 3 angeordnet ist bzw. sind.

An jeder der beiden Stirnflächen 4 und 5 sind über den Umfang gleichverteilt drei Friktionselemente 6 in Form von Halbkugeln aus Al2O3 angeordnet, wobei diese stoffschlüssig mit dem piezokeramischen Material des Ultraschallaktors verbunden sind. Es ist jedoch ebenso denkbar, die Friktionselemente 6 über eine formschlüssige Verbindung an den Stirnflächen anzuordnen, indem beispielsweise kugelförmige Friktionselemente in komplementäre Ausnehmungen an den Stirnflächen eingelassen bzw. eingesetzt sind.

Insgesamt umfasst der Ultraschallaktor sechs Friktionselemente 6. Jedes Friktionselement 6 ist im Bereich eines Trennspalts 9 zwischen benachbarten Erregerelektroden 8 angeordnet.

Jeweils zwischen den beiden hinsichtlich des Umfangs des Ultraschallaktors 1 benachbarten, aber auf unterschiedlichen Stirnflächen 4, 5 befindlichen Friktionselementen 6, sind zwei Erregerelektroden 8 angeordnet. Hierbei bilden die jeweils zwischen den beiden hinsichtlich des Umfangs des Ultraschallaktors 1 benachbarten und auf unterschiedlichen Stirnflächen 4, 5 befindlichen Friktionselemente 6 ein Gegenpaar 10, wie dies in Figur 2 verdeutlicht ist.

Der hinsichtlich des Umfangs des Ultraschallaktors 1 bestehende Abstand zwischen den beiden Friktionselementen 6 eines Gegenpaares 10 ist für alle sechs Gegenpaare 10 identisch, so dass zwei aneinander angrenzende Gegenpaare 10 von Friktionselementen 6 bezüglich des Umfangs symmetrisch zueinander angeordnet sind.

Beide Stirnflächen 4 und 5 weisen jeweils im Bereich des Trennspalts 9 zwischen den beiden Erregerelektroden 8 eines Gegenpaares 10 eine nutenförmige Ausnehmung 11 auf, so dass im vorliegenden Fall jede der beiden Stirnflächen 4 und 5 sechs gleichmäßig über den Umfang verteilte Ausnehmungen 11 umfasst, wobei die sechs Ausnehmungen 11 der in den Figuren 1 und 2 oberen Stirnfläche 4 an den gleichen Umfangspositionen wie die sechs Ausnehmungen 11 der in den Figuren 1 und 2 unteren Stirnfläche 5. Mit anderen Worten sind die Ausnehmungen 11 paarweise gegenüberliegend angeordnet. Alle nutenförmigen Ausnehmungen 11 sind hierbei im Wesentlichen senkrecht zu der inneren Umfangsfläche 2 und senkrecht zu der äußeren Umfangsfläche 3 angeordnet.

Durch diese spezifische Anordnung der Friktionselemente 6 und der Erregerelektroden 8 zueinander gelingt es, bei einer elektrischen Anregung des Ultraschallaktors 1, d.h. bei einer Beaufschlagung der Elektroden 7 und 8 mit einer bzw. mit mehreren elektrischen Spannungen, dass die Friktionselemente 6 beider Stirnflächen 4 und 5, also alle Friktionselemente des Ultraschallaktors 1, eine gleichzeitige bzw. synchrone Bewegung vollführen, die zum Rotationsantrieb eines mit den Friktionselementen in Kontakt stehenden anzutreibenden Elements führt.

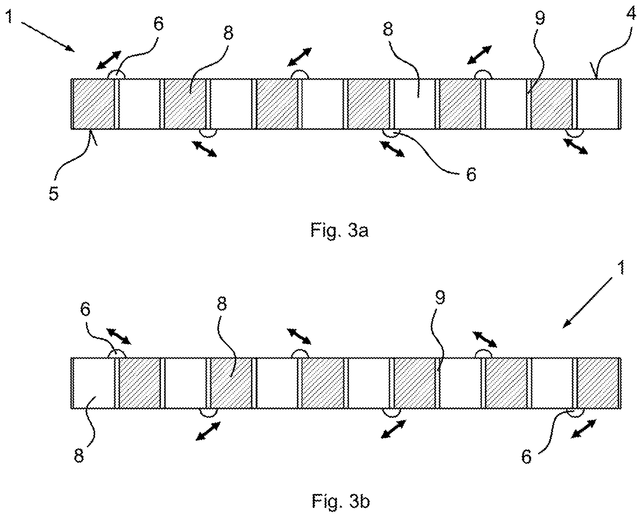

Das Vorstehende lässt sich insbesondere aus den Figuren 3a und 3b ableiten, welche jeweils den hohlzylindrischen Ultraschallaktor gemäß den Figuren 1 und 2 in einer abgewickelten Form zeigen. Diese Darstellungsform ist besser geeignet aufzuzeigen, wie sich alle der an den beiden Stirnflächen 4 und 5 angeordneten Friktionselemente 6 bei einer geeigneten elektrischen Ansteuerung des erfindungsgemäßen Ultraschallaktors bewegen. Die beiden Figuren 3a und 3b unterscheiden sich hierbei lediglich durch die gegensätzlichen Schwingungsrichtungen der Friktionselemente 6, die zu entgegengesetzten Rotationsbewegungen eines mit den Friktionselementen 6 in Kontakt stehenden anzutreibenden Elements (in den Figuren 3a und 3b nicht gezeigt) führen. In den Figuren 3a und 3b sind die Ausnehmungen 11 des Ultraschallaktors gemäß den Figuren 1 und 2 nicht gezeigt, um die Darstellung möglichst einfach zu halten.

Wie anhand Figur 3a zu erkennen ist, bewegen sich bei geeigneter elektrischer Ansteuerung der schraffierten Erregerelektroden 8 des Ultraschallaktors 1 die drei an der oberen Stirnfläche 4 angeordneten Friktionselemente 6 gleichsinnig und synchron oszillierend entlang einer zu der Stirnfläche 4 geneigten und im Wesentlichen linienförmigen Bewegungsbahn bzw. Trajektorie, gekennzeichnet durch die dargestellten Doppelpfeile. Gleichzeitig bewegen sich die drei an der unteren Stirnfläche 5 angeordneten Friktionselemente 6 gleichsinnig und synchron oszillierend entlang einer zu der Stirnfläche 5 geneigten und im Wesentlichen linienförmigen Bewegungsbahn bzw. Trajektorie, wobei diese Bewegungsbahn bzw. die Trajektorie im Wesentlichen entgegengesetzt zur der Trajektorie der an der Stirnfläche 4 angeordneten Friktionselement 6 angeordnet ist (ebenso dargestellt durch die eingezeichneten Doppelpfeile). Mit anderen Worten schließt die Trajektorie der an der oberen Stirnfläche 4 angeordneten Friktionselemente mit der Stirnfläche 4 einen kleineren und einen größeren Winkel ein, und diese beiden Winkel sind im Wesentlichen identisch mit den entsprechenden Winkeln, welche die Trajektorie der an der unteren Stirnfläche 5 angeordneten Friktionselemente 6 mit der Stirnfläche 5 einschließen.

Mittels der in Figur 3a gezeigten Trajektorien der an den beiden Stirnflächen 4 und 5 angeordneten Friktionselemente 6 kann eine Bewegung eines mit den Friktionselementen 6 in Kontakt stehenden anzutreibenden Elements (in den Figuren 3a und 3b nicht gezeigt) generiert werden, welche einer Rotationsbewegung entgegen dem Uhrzeigersinn entspricht. Im Gegensatz hierzu kann mit den in Figur 3b gezeigten und entgegengesetzten Trajektorien der an den beiden Stirnflächen 4 und 5 angeordneten Friktionselemente 6 - welche durch geeignete elektrische Ansteuerung der in Figur 3b schraffiert dargestellten Erregerelektroden 8 erzeugt werden - eine Bewegung eines mit den Friktionselementen 6 in Kontakt stehenden anzutreibenden Elements generiert werden, welche einer Rotationsbewegung im Uhrzeigersinn entspricht.

Abweichend von den in den Figuren 3a und 3b jeweils durch Doppelpfeile angedeuteten linienförmigen Trajektorien sind auch solche Trajektorien geeignet, die eine elliptische Form bzw. eine Kreisform aufweisen.

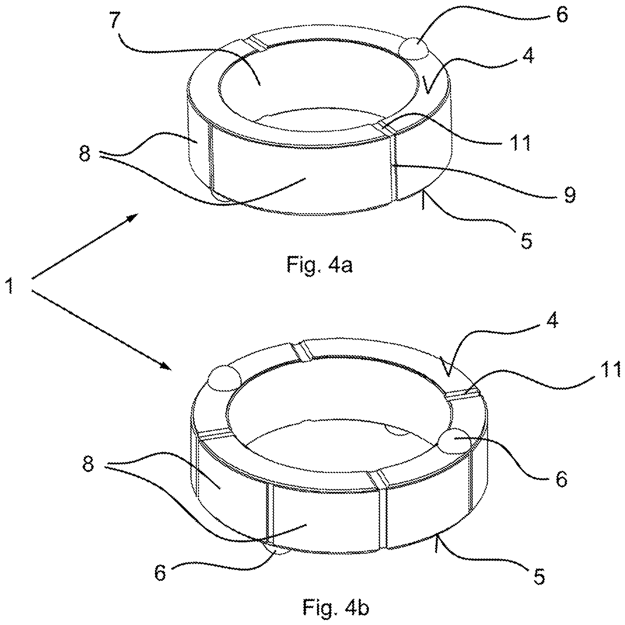

Figur 4a zeigt eine Ausführungsform eines erfindungsgemäßen Ultraschallaktors 1 mit lediglich jeweils einem an den beiden Stirnflächen 4 und 5 angeordneten Friktionselement 6. Die Friktionselemente 6 sind dabei diametral gegenüberliegend angeordnet, d.h. bezogen auf den Umfang des Hohlzylinders besteht zwischen den beiden Friktionselementen ein Winkelabstand von im Wesentlichen 180°. Der Ultraschallaktor weist weiterhin vier gleichmäßig über den Außenumfang des Hohlzylinders angeordnete und jeweils durch einen Trennspalt 9 voneinander beabstandete, identische Erregerelektroden 8 auf. Jede der beiden Stirnflächen 4 und 5 weist zwei diametral gegenüberliegend angeordnete und bezogen auf den Umfang des Hohlzylinders gleich positionierte nutenförmige Ausnehmungen 11 auf.

In Figur 4b ist eine weitere Ausführungsform eines erfindungsgemäßen Ultraschallaktors dargestellt, wobei hier im Gegensatz zu dem in Figur 4a gezeigten Ultraschallaktor jeweils zwei diametral gegenüberliegend angeordnete Friktionselemente 6 pro Stirnfläche vorgesehen sind. Der bezogen auf den Umfang des Hohlzylinders bestehende Winkelabstand benachbarter, aber auf unterschiedlichen Stirnflächen angeordneter Friktionselemente, beträgt im Wesentlichen 90°. An der äußeren Umfangsfläche 3 des Ultraschallaktors 1 sind insgesamt acht identische Erregerelektroden 8 angeordnet. Jede der Stirnflächen 3 und 4 weist vier gleichmäßig über den Umfang verteilte nutenförmige Ausnehmungen 11 auf.

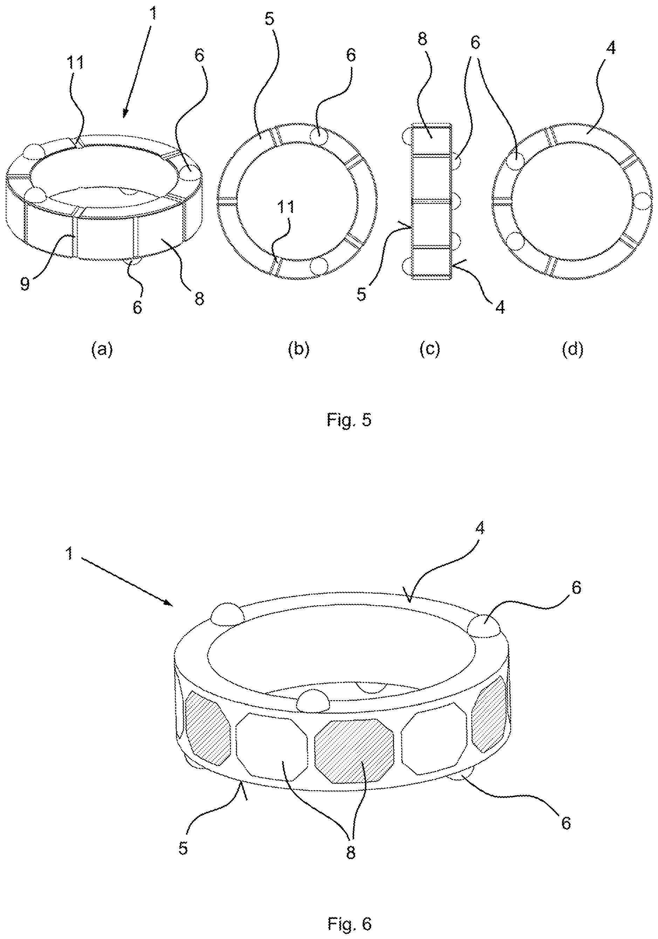

Figur 5 zeigt in den Abbildungen (a) bis (d) in unterschiedlichen Ansichten eine weitere Ausführungsform eines erfindungsgemäßen Ultraschallaktors 1, wobei Figur 5 (a) den Ultraschallaktor in einer perspektivischen Darstellung zeigt, Figur 5 (b) eine Draufsicht auf die Unterseite bzw. in Richtung auf die Stirnfläche 5 zu zeigt, Figur 5 (c) eine Seitenansicht und Figur 5 (d) eine Draufsicht auf die Oberseite bzw. in Richtung auf die obere Stirnfläche 4 zu zeigt. Bei diesem Ultraschallaktor ist eine unterschiedliche Anzahl von Friktionselementen 6 auf den beiden Stirnflächen 4 und 5 angeordnet. So sind an der in Figur 5 oberen Stirnfläche 4 drei nicht gleichmäßig über den Umfang verteilte Friktionselemente 6 angeordnet. An der in Figur unteren Stirnfläche 5 sind hingegen nur zwei Friktionselemente 6 angeordnet, die nicht diametral gegenüberliegend angeordnet sind, so dass auch hier eine nicht gleichmäßige Verteilung der Friktionselemente 6 über den Umfang der Stirnfläche 5 vorliegt. Hieraus resultieren insgesamt vier Gegenpaare 10 von Friktionselementen 6. An der äußeren Umfangsfläche 3 des hohlzylinderförmigen Ultraschallaktors 1 sind zehn identische und jeweils voneinander beabstandete Erregerelektroden 8 angeordnet.

Figur 6 verdeutlicht eine weitere Ausführungsform eines erfindungsgemäßen Ultraschallaktors 1, der abweichend zu der in den Figuren 1 und 2 gezeigten Ausführungsform achteckig geformte Erregerelektroden 8 aufweist. Aufgrund dieser Form der Erregerelektroden 8 bleibt insbesondere der Bereich des elektromechanischen Materials des hohlzylindrischen Rings frei und unbedeckt mit Elektroden, wo die Schwingungsamplituden des zur Ausübung von periodischen Deformationen angeregten Ultraschallaktors vergleichsweise groß sind. Ein so ausgeführter Ultraschallaktor benötigt weniger elektrische Energie und kann somit effektiver betrieben werden. Neben der in Figur 6 gezeigten achteckigen Form der Erregerelektroden sind weitere Formen denkbar, bei welchen der der jeweiligen Stirnfläche zu gewandte Endbereich zwischen zwei angrenzenden Erregerelektroden von Elektroden unbedeckt bleibt. Hierfür eignen sich beispielsweise auch runde bzw. abgerundete Erregerelektroden oder ovale Erregerelektroden.

Das einzige weitere Unterscheidungsmerkmal zu der in den Figuren 1 und 2 gezeigten Ausführungsform sind die bei dem Ultraschallaktor gemäß Figur 6 fehlenden Ausnehmungen an den Stirnflächen 4 und 5.

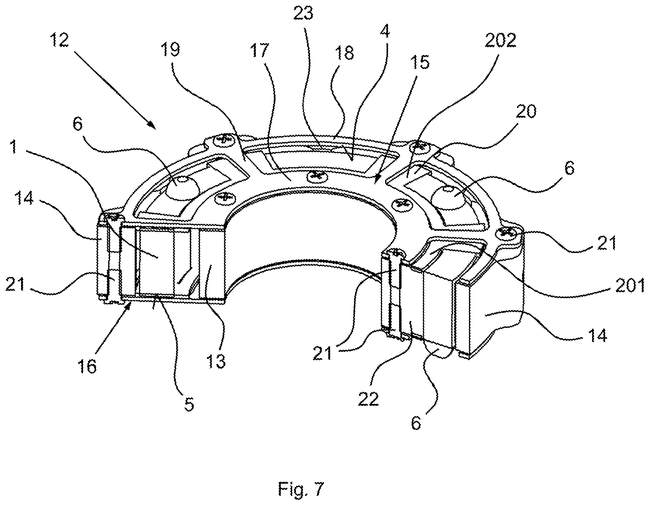

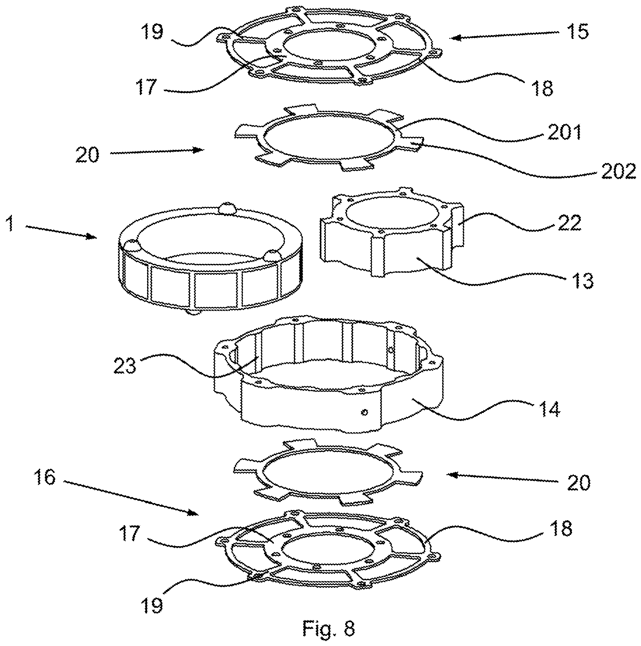

Die Figuren 7 und 8 zeigen in unterschiedlichen Darstellungen eine Haltevorrichtung 12 für einen erfindungsgemäßen Ultraschallaktor, wobei hier ein Ultraschallaktor gemäß den Figuren 1 und 2 in der Haltevorrichtung montiert bzw. eingesetzt ist. Die Haltevorrichtung 12 weist ein inneres Kontaktelement 13, ein äußeres Kontaktelement 14 und zwei Halteelemente 15 und 16 auf. Das innere wie das äußere Kontaktelement 13 und 14 bestehen hierbei aus einem Kunststoff und bevorzugt aus Polyetheretherketon (PEEK), während die beiden Halteelemente 15 und 16 aus einem federelastische Eigenschaften aufweisenden Metall und bevorzugt aus Federstahl bestehen.

Das im Wesentlichen hohlzylinderförmige innere Kontaktelement 13 kontaktiert über gleichmäßig über den Umfang verteilte Vorsprungabschnitte 22 bereichsweise die innere Umfangsfläche des Ultraschallaktors 1, während das den Ultraschallaktor an seiner äußeren Umfangsfläche umgebende, im Wesentlichen hohlzylinderförmige äußere Kontaktelement über Vorsprungabschnitte 23 die äußere Umfangsfläche des Ultraschallaktors bereichsweise kontaktiert. Die Vorsprungabschnitte 22 und 23 des inneren und des äußeren Kontaktelements 13 und 14 haben an den Stellen bzw. Bereichen Kontakt mit dem Ultraschallaktor, an denen sich Schwingungsknoten des im Betrieb periodischen Deformationen unterliegenden Ultraschallaktors ausbilden.

Durch die Vorsprungabschnitte 22 und 23 des inneren und des äußeren Kontaktelements 13 und 14 ist der Ultraschallaktor 1 bereits derart gelagert bzw. gehaltert, dass laterale Verschiebungen in der Ebene des Ultraschallaktors weitgehend unterbunden sind. Um den Ultraschallaktor jedoch zusätzlich auch noch gegen rotatorische Verschiebung und insbesondere gegen eine axiale Verschiebung zu sichern, sind das innere Kontaktelement 13 und das äußere Kontaktelement 14 über zwei parallel zueinander angeordnete und identisch ausgebildete Halteelemente 15 und 16 miteinander verbunden. Die Halteelemente 15 und 16 weisen hierbei zwei im Wesentlichen kreisförmige und konzentrisch zueinander angeordnete Ringabschnitte 17 und 18 und die Ringabschnitte 17 und 18 miteinander verbindende Stegabschnitte 19 auf.

Das in Figur 7 obere Halteelement 15 ist der Stirnfläche 4 des Ultraschallaktors zugewandt bzw. nahe zu dieser angeordnet, während das in Figur 7 untere Halteelement 16 der Stirnfläche 5 des Ultraschallaktors zugewandt ist. Durch Befestigungsmittel 21 in Form von Schrauben sind beide Halteelemente 15 und 16 mit den inneren und äußeren Kontaktelementen 13 und 14 verbunden, wobei der innere Ringabschnitt 17 mit dem inneren Kontaktelement 13 an mehreren und gleichmäßig über den Umfang verteilten Stellen verschraubt ist, während der äußere Ringabschnitt 18 an mehreren und gleichmäßig über den Umfang verteilten Stellen mit dem äußeren Kontaktelement 14 verschraubt ist.

Die den inneren Ringabschnitt 17 und den äußeren Ringabschnitt 18 miteinander verbindenden Stegabschnitte 19 kontaktieren die jeweils zugeordnete Stirnfläche 4 bzw. 5 indirekt über ein Zwischenelement 20 aus einem gummiartigen Material. Das Zwischenelement 20 verhindert einerseits den direkten Kontakt der aus Metall bestehenden Halteelemente 15 und 16 mit dem elektromechanischen Material des Ultraschallaktors, welcher zu einem Abtrag des elektromechanischen Materials aufgrund der Schwingungen des Ultraschallaktors führen kann. Zum Anderen ist durch das gummiartige Material des Zwischenelements 20 ein vergleichsweise hoher Reibungskoeffizient bezüglich der Paarungen Zwischenelement/Stegabschnitt des Halteelements und Zwischenelement/Stirnfläche des Ultraschallaktors gegeben, so dass dem Bestreben des Ultraschallaktors nach einer rotatorischen Bewegung bzw. Verschiebung wirksam begegnet wird.

Das Halteelement 20 umfasst einen Ringabschnitt 201 und mehrere integral mit dem Ringabschnitt 201 ausgebildete Fahnenabschnitte 202, wobei die Fahnenabschnitte 202 gleichmäßig über den Umfang des Ringabschnitts 201 verteilt und in radialer Ausrichtung angeordnet sind.

Die Stegabschnitte 19 der beiden Halteelemente 15 und 16 sind so angeordnet, dass ihre Position im Wesentlichen mit der Position der in Figur 7 nicht erkennbaren Ausnehmungen 11 des Ultraschallaktors übereinstimmen. Die Breite der Stegabschnitte 19 ist hierbei kleiner als die Breite der Ausnehmungen 11, so dass der jeweilige Abschnitt des deformierbaren Zwischenelements 20 über den Stegabschnitt 19 zumindest teilweise in die entsprechende Ausnehmung 11 gedrückt ist, und der resultierende mechanische Eingriff in optimierter Weise einer rotatorischen Verschiebung des Ultraschallaktors im Betrieb entgegenwirkt.

Das Zwischenelement 20 sorgt weiterhin dafür, dass eine ausreichende Haltekraft bzw. Druckkraft über den jeweiligen Stegabschnitt 20 in axialer Richtung, d.h. in Richtung auf die jeweilige Stirnfläche des Ultraschallaktors zu, auf den Ultraschallaktor ausübbar ist, da über das Zwischenelement selbst bei geringen Fertigungstoleranzen ein Kontakt zwischen dem jeweiligen Stegabschnitt 19 und der zugehörigen Stirnfläche 4 bzw. 5 des Ultraschallaktors 1 gewährleistet ist.

Figur 8 zeigt die Einzelteile der Anordnung von Haltevorrichtung und Ultraschallaktor gemäß Figur 7 in einer Explosionsdarstellung. Insbesondere kann Figur 8 die integrale bzw. einstückige Ausbildung des Zwischenelements 20 mit dem Ringabschnitt 201 und den gleichmäßig über den Umfang des Ringabschnitts verteilten Fahnenabschnitten 202, die sich in radialer Richtung von dem Ringabschnitt 201 weg erstrecken, entnommen werden.

Anhand Figur 8 lassen sich weiterhin auch besser die Vorsprungabschnitte 22 des inneren Kontaktelements 13 und die Vorsprungabschnitte 23 des äußeren Kontaktelements 14 erkennen. Die Vorsprungabschnitte 22 und 23 sind jeweils gleichmäßig über den Umfang verteilt angeordnet, wobei das innere Kontaktelement 13 sechs integral mit diesem ausgebildete und radial nach außen weisende Vorsprungabschnitte 22 aufweist, während das äußere Kontaktelement 14 zwölf integral mit diesem ausgebildete und radial nach innen weisende Vorsprungabschnitte 23 aufweist.

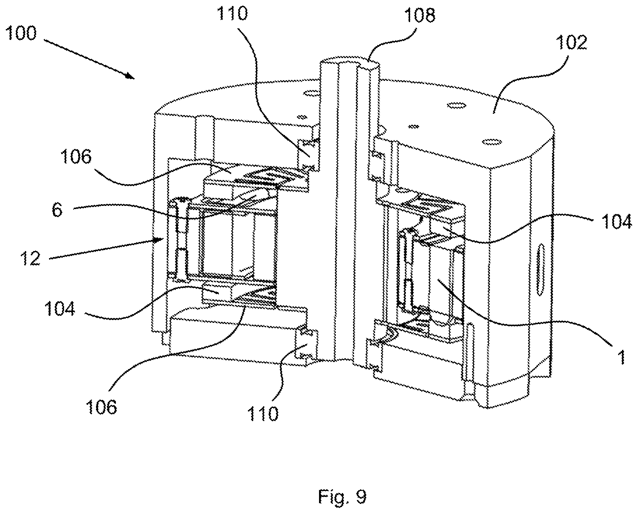

Figur 9 zeigt einen Ultraschallmotor mit einem erfindungsgemäßen Ultraschallaktor 1 gemäß den Figuren 1 und 2, der in einer erfindungsgemäßen Haltevorrichtung 12 gemäß den Figuren 7 und 8 eingesetzt ist. Mit den Friktionselementen 6 einer Stirnfläche ist jeweils ein Reibring 104 in Kontakt, welcher jeweils über eine Federscheibe 106 gegen die zugeordneten Friktionselemente 6 angedrückt ist.

Die Haltevorrichtung 12 ist ortsfest mit dem Gehäuse 102 des Ultraschallmotors 100 verbunden, während die Federscheibe 106 mit einem Abschnitt der Antriebswelle 108 des Ultraschallmotors 100 verbunden ist. Die Antriebswelle 108 ist dabei drehbar über Lagerelemente 110 in Form von Kugellagern gegenüber dem Gehäuse 102 gelagert.

Im Betrieb des Ultraschallmotors 100 führen die periodischen Bewegungen der an beiden Stirnflächen des Ultraschallaktors 1 angeordneten Friktionselemente 6 zu einem Antrieb der beiden Reibringe 104 in gleicher Richtung, und diese Bewegung wird über die feste Verbindung der Reibringe 104 mit den Federscheiben 106 und die gleichzeitig feste Verbindung der Federscheiben 106 mit der Antriebswelle 108 auf diese übertragen, so dass es zu einem rotatorischen Antrieb der Antriebswelle 108 kommt.

### Bezugszeichenliste

- 1: Ultraschallaktor
- 2: innere Umfangsfläche (des Ultraschallaktors 1)
- 3: äußere Umfangsfläche (des Ultraschallaktors 1)
- 4, 5: Stirnflächen (des Ultraschallaktors 1)
- 6: Friktionselement
- 7: gemeinsame Elektrode
- 8: Erregerelektrode
- 9: Trennspalt
- 10: Gegenpaar (von Friktionselementen 6)
- 11: Ausnehmung (des Ultraschallaktors 1)
- 12: Haltevorrichtung
- 13: inneres Kontaktelement (der Haltevorrichtung 12)
- 14: äußeres Kontaktelement (der Haltevorrichtung 12)
- 15, 16: Halteelemente (der Haltevorrichtung 12)
- 17: innerer Ringabschnitt (der Halteelemente 15, 16)
- 18: äußerer Ringabschnitt (der Halteelemente 15, 16)
- 19: Stegabschnitt (der Halteelemente 15, 16)
- 20: Zwischenelement
- 21: Befestigungsmittel
- 22: Vorsprungabschnitt (des inneren Kontaktelements 13)
- 23: Vorsprungabschnitt (des äußeren Kontaktelements 14)
- 100: Ultraschallmotor
- 102: Gehäuse (des Ultraschallmotors 100)
- 104: Reibring (des Ultraschallmotors 100)
- 106: Federscheibe (des Ultraschallmotors 100)
- 108: Antriebswelle (des Ultraschallmotors 100)
- 110: Lagerelement (des Ultraschallmotors 100)
- 201: Ringabschnitt (des Zwischenelements 20)
- 202: Fahnenabschnitt (des Zwischenelements 20)

## Patentansprüche

1. Ultraschallaktor (1) aus einem elektromechanischen Material in Form eines Rings oder Hohlzylinders, welcher eine radial nach innen weisende innere Umfangsfläche (2), eine radial nach außen weisende äußere Umfangsfläche (3) und die innere Umfangsfläche und die äußere Umfangsfläche verbindende Stirnflächen (4, 5) aufweist, wobei an jeder der beiden Stirnflächen (4, 5) wenigstens ein Friktionselement (6) angeordnet ist, so dass der Ultraschallaktor (1) insgesamt n Friktionselemente (6) mit n ≥ 2 umfasst, und an der inneren Umfangsfläche (2) eine gemeinsame Elektrode (7) angeordnet ist und an der äußeren Umfangsfläche (3) 2n Erregerelektroden (8) angeordnet sind, wobei benachbarte Erregerelektroden (8) jeweils durch einen Trennspalt (9) voneinander beabstandet sind, und jedes Friktionselement (6) im Bereich eines Trennspalts (9) angeordnet ist, wobei jeweils zwischen den beiden hinsichtlich des Umfangs des Ultraschallaktors (1) benachbarten und auf unterschiedlichen Stirnflächen (4, 5) befindlichen Friktionselementen (6), welche ein Gegenpaar (10) bilden, zwei Erregerelektroden (8) angeordnet sind, und wobei der Ultraschallaktor (1) derart konfiguriert ist, dass bei einer elektrischen Anregung des Ultraschallaktors (1) die Friktionselemente (6) beider Stirnflächen (4, 5) gleichzeitig eine oszillierende Bewegung vollführen, bei der ein gleichsinniger rotatorischer Antrieb eines mit den Friktionselementen in Kontakt stehenden anzutreibenden Elements erfolgt.

2. Ultraschallaktor (1) nach Anspruch 1, wobei der hinsichtlich des Umfangs des Ultraschallaktors (2) bestehende Abstand zwischen den beiden Friktionselementen (6) eines Gegenpaares (10) für alle Gegenpaare (10) identisch ist, so dass zwei aneinander angrenzende Gegenpaare (10) von Friktionselementen (6) symmetrisch zueinander angeordnet sind.

3. Ultraschallaktor (1) nach Anspruch 1 oder 2, wobei beide Stirnflächen (4, 5) jeweils im Bereich des Trennspalts (9) zwischen den beiden Erregerelektroden (8) eines Gegenpaares (10) eine Ausnehmung (11) aufweisen.

4. Ultraschallaktor (1) nach Anspruch 3, wobei die Ausnehmungen (11) gleichmäßig über den Umfang des Ultraschallaktors (1) verteilt angeordnet sind.

5. Ultraschallaktor (1) nach Anspruch 3 oder 4, wobei die Ausnehmungen (11) nutenförmig sind.

6. Ultraschallaktor (1) nach Anspruch 5, wobei die nutenförmigen Ausnehmungen (1) im Querschnitt im Wesentlichen eine V-Form oder eine U-Form aufweisen.

7. Ultraschallaktor (1) nach Anspruch 5 oder 6, wobei die nutenförmigen Ausnehmungen (11) im Wesentlichen senkrecht zu der inneren Umfangsfläche (2) und senkrecht zu der äußeren Umfangsfläche (3) angeordnet sind.

8. Ultraschallaktor (1) nach einem der vorhergehenden Ansprüche, wobei die Erregerelektroden (8) eine mehr als vier Ecken aufweisende und insbesondere eine achteckige Form aufweisen.

9. Ultraschallmotor (100) mit einem Ultraschallaktor (1) nach einem der Ansprüche 1 bis 8 und mit einer Haltevorrichtung (12), wobei der Ultraschallmotor in der Haltevorrichtung eingesetzt ist und die Haltevorrichtung (12) ein inneres Kontaktelement ( 13), ein äußeres Kontaktelement (14) und zwei Halteelemente (15, 16) aufweist, wobei das innere Kontaktelement (13) und das äußere Kontaktelement (14) über die beiden Halteelemente (15, 16) miteinander verbunden sind und das innere Kontaktelement (13) abschnittsweise in Kontakt mit der inneren Umfangsfläche (2) des Ultraschallaktors (1) steht und das äußere Kontaktelement (14) abschnittsweise mit der äußeren Umfangsfläche (3) des Ultraschallaktors (1) in Kontakt steht, und weiterhin die Haltelernente (15, 16) mit den Stirnflächen (4, 5) des Ultraschallaktors (1) in Kontakt stehen und den Ultraschallaktor (1) zwischen sich einspannen.

10. Ultraschallmotor (100) nach Anspruch 9, wobei die Halteelemente (15, 16) zwei im Wesentlichen kreisförmige und konzentrisch zueinander angeordnete Ringabschnitte (17, 18) und die Ringabschnitte (17, 18) miteinander verbindende Stegabschnitte (19) aufweisen.

11. Verfahren zur elektrischen Anregung des Ultraschallaktors (1) nach einem der Ansprüche 1 bis 8, wobei die elektrische Anregung derart erfolgt, dass die Friktionselemente (6) beider Stirnflächen (4, 5) gleichzeitig eine Bewegung vollführen, bei der ein gleichsinniger rotatorischer Antrieb eines mit den Friktionselementen in Kontakt stehenden anzutreibenden Elements erfolgt.

## Claims

1. Ultrasonic actuator (1) made of an electromechanical material in the form of a ring or hollow cylinder, which comprises an inner peripheral surface (2) which is oriented radially inwards, an outer peripheral surface (3) which is oriented radially outwards and end faces (4, 5) which connect the inner peripheral surface and the outer peripheral surface, wherein at least one friction element (6) is disposed on each of the two end faces (4, 5) so that the ultrasonic actuator (1) comprises a total of n friction elements (6) with n > 2, and wherein a common electrode (7) is disposed on the inner peripheral surface (2) and 2n excitation electrodes (8) are disposed on the outer peripheral surface (3), wherein adjacent excitation electrodes (8) are in each case spaced apart from one another by a separating gap (9), and each friction element (6) is disposed in the region of a separating gap (9), wherein two excitation electrodes (8) are disposed between friction elements (6) which are located adjacent with regard to the circumference of the ultrasonic actuator (1) and on different end faces (4, 5) and form an opposing pair (10), and wherein the ultrasonic actuator (1) is configured such that, when the ultrasonic actuator (1) is electrically excited, the friction elements (6) of both end faces (4, 5) simultaneously perform a movement by which an equidirectional rotary drive of an element to be driven which is in contact with the friction elements is realized.

2. Ultrasonic actuator (1) according to claim 1, wherein the distance between the two friction elements (6) of an opposing pair (10) which exists with regard to the circumference of the ultrasonic actuator (2) is identical for all opposing pairs (10), so that two opposing pairs (10) of friction elements (6), which are positioned adjacent to one another, are disposed symmetrically to one another.

3. Ultrasonic actuator (1) according to claims 1 or 2, wherein both end faces (4, 5), in each case in the area of the separation gap (9) between the two excitation electrodes (8) of one opposing pair (10), comprise a recess (11).

4. Ultrasonic actuator (1) according to claim 3, wherein the recesses (11) are disposed distributed equally over the circumference of the ultrasonic actuator (1).

5. Ultrasonic actuator (1) according to claim 3 or 4, wherein the recesses (11) are groove-shaped.

6. Ultrasonic actuator (1) according to claim 5, wherein the groove-shaped recesses (1) comprise substantially a V-shape or a U-shape in cross section.

7. Ultrasonic actuator (1) according to claims 5 or 6, wherein the groove-shaped recesses (11) are disposed essentially perpendicular to the inner peripheral surface (2) and perpendicular to the outer peripheral surface (3).

8. Ultrasonic actuator (1) according to one of the preceding claims, wherein the excitation electrodes (8) comprise a shape with more than four corners and in particular an octagonal shape.

9. Ultrasonic motor (100) with an ultrasonic actuator (1) according to one of claims 1 to 8 and with a holding device (12), wherein the ultrasonic motor is inserted in the holding device and the holding device (12) comprises an inner contact element (13), an outer contact element (14) and two holding elements (15, 16), wherein the inner contact element (13) and the outer contact element (14) are connected to one another by the two holding elements (15, 16) and the inner contact element (13) is in a section in contact with the inner peripheral surface (2) of the ultrasonic actuator (1) and the outer contact element (14) is in a section in contact with the outer peripheral surface (3) of the ultrasonic actuator (1), and furthermore the holding elements (15, 16) are in contact with the end faces (4, 5) of the ultrasonic actuator (1) and clamp the ultrasonic actuator (1) between themselves.

10. Ultrasonic motor (100) according to claim 9, wherein the holding elements (15, 16) comprise two ring sections (17, 18) which are substantially circular and concentrically disposed to each other, and web sections (19) which connect the ring sections (17, 18) to one another.

11. Method for electrically excitation the ultrasonic actuator (1) according to one of claims 1 to 8, the electrical excitation is taking place in such a way that the friction elements (6) of both end faces (4, 5) simultaneously perform a movement in which a rotary drive in the same direction of an element to be driven which is in contact with the friction elements.

## Revendications

1. Actionneur à ultrasons (1) en une matière électromécanique, sous la forme d'un anneau ou d'un cylindre creux, lequel comporte une surface circonférentielle (2) intérieure, dirigée vers l'intérieur en direction radiale, une surface circonférentielle (3) extérieure, dirigée vers l'extérieur en direction radiale et des surfaces frontales (4, 5) reliant la surface circonférentielle intérieure et la surface circonférentielle extérieure, et sur chacune des deux surfaces frontales (4, 5) étant placé au moins un élément de friction (6), de telle sorte que l'actionneur à ultrasons (1) comprenne au total n éléments de friction (6), avec n ≥ 2, et sur la surface circonférentielle (2) interne étant placée une électrode (7) commune et sur la surface circonférentielle (3) extérieure étant placées 2n électrodes d'excitation (8), des électrodes d'excitation (8) voisines étant chaque fois écartées l'une de l'autre par une fente de séparation (9), et chaque élément de friction (6) étant placé dans la zone d'une fente de séparation (9), chaque fois entre les deux éléments de friction (6) voisins par rapport à la circonférence de l' actionneur à ultrasons (1) et situés sur différentes faces frontales (4, 5), lesquels forment une paire antagoniste (10) étant placées deux électrodes d'excitation (8), et l'actionneur à ultrasons (1) étant configuré de telle sorte que lors d'une excitation électrique de l'actionneur à ultrasons (1), les éléments de friction (6) des deux surfaces frontales (4, 5) effectuent simultanément un déplacement oscillant, lors duquel a lieu un entraînement en rotation dans le même sens d'un élément qui doit être entraîné, qui est en contact avec les éléments de friction.

2. Actionneur à ultrasons (1) selon la revendication 1, l'écart existant entre les deux éléments de friction (6) d'une paire antagoniste (10) par rapport à la circonférence de l'actionneur à ultrasons (2) étant identique pour toutes les paires antagonistes (10), de sorte que deux paires antagonistes (10) adjacentes d'éléments de friction (6) soient placées de manière symétrique l'une par rapport à l'autre.

3. Actionneur à ultrasons (1) selon la revendication 1 ou 2, les deux surfaces frontales (4, 5) comportant chaque fois un évidement (11) dans la zone de la fente de séparation (9), entre les deux électrodes d'excitation (8) d'une paire antagoniste (10).

4. Actionneur à ultrasons (1) selon la revendication 3, les évidements (11) étant placés en étant distribués régulièrement sur la circonférence de l'actionneur à ultrasons (1).

5. Actionneur à ultrasons (1) selon la revendication 3 ou 4, les évidements (11) étant en forme de rainures.

6. Actionneur à ultrasons (1) selon la revendication 5, les évidements (1) en forme de rainures présentant dans la section transversale sensiblement la forme d'un V ou la forme d'un U.

7. Actionneur à ultrasons (1) selon la revendication 5 ou 6, les évidements (11) en forme de rainures étant placés sensiblement à la perpendiculaire de la surface circonférentielle (2) intérieure et à la perpendiculaire de la surface circonférentielle (3) extérieure.

8. Actionneur à ultrasons (1) selon l'une quelconque des revendications précédentes, les électrodes d'excitation (8) présentant une forme comportant plus de quatre angles et notamment une forme octogonale.

9. Moteur ultrasonique (100) comprenant un actionneur à ultrasons (1) selon l'une quelconque des revendications 1 à 8 et comprenant un dispositif de maintien (12), le moteur ultrasonique étant inséré dans le dispositif de maintien et le dispositif de maintien ( 12) comportant un élément de contact ( 13) intérieur, un élément de contact (14) extérieur et deux éléments de maintien (15, 16), l'élément de contact (13) intérieur et l'élément de contact (14) extérieur étant reliés l'un avec l'autre par l'intermédiaire des deux éléments de maintien (15, 16) et l'élément de contact (13) intérieur étant en contact par endroits avec la surface circonférentielle (2) intérieure de l'actionneur à ultrasons (1) et l'élément de contact (14) extérieur étant en contact par endroits avec la surface circonférentielle (3) extérieure de l'actionneur à ultrasons (1), et par ailleurs les éléments de maintien (15, 16) étant en contact avec les surfaces frontales (4, 5) de l'actionneur à ultrasons (1) et enserrant entre elles l'actionneur à ultrasons (1).

10. Moteur ultrasonique (100) selon la revendication 9, les éléments de maintien (15, 16) comportant deux segments annulaires (17, 18) sensiblement de forme circulaire et placés de manière concentrique, l'un par rapport à l'autre et les segments annulaires (17, 18) comportant des segments en barrettes (19) les reliant l'un à l'autre.

11. Procédé pour l'excitation électrique de l'actionneur à ultrasons (1) selon l'une quelconque des revendications 1 à 8, l'excitation électrique ayant lieu de telle sorte que les éléments de friction (6) des deux surfaces frontales (4, 5) effectuent simultanément un déplacement oscillant, lors duquel a lieu un entraînement en rotation dans le même sens d'un élément qui doit être entraîné, qui est en contact avec les éléments de friction.
